# EUROPEAN PATENT SPECIFICATION

(11) **EP 2 101 531 B1**
(45) Date of publication and mention of the grant of the patent: **18.02.2015**
(21) Application number: 09003691.4
(22) Date of filing: 13.03.2009
(51) Int. Cl.: H04L 1/18

(54) **Method and apparatus for handling a contention-based random acces procedure**
Verfahren und Vorrichtung zur Abwicklung eines konkurrenzbasierten Direktzugriffsvorgangs
Procédé et appareil de manipulation d'une procédure d'accès aléatoire à base de contention

(30) Priority: 14.03.2008 US 36478 P
(43) Date of publication of application: 16.09.2009
(73) Proprietor: Innovative Sonic Limited, Ebene 72201 (MU)
(72) Inventor: Kuo, Richard Lee-Chee, Taipei City, Taiwan R.O.C. (TW)
(74) Representative: Schaeberle, Steffen

(56) References cited:
- US-A1- 2007 064 665
- PHILIPS ET AL: "Control of HARQ for RACH messages 3 and 4" 3GPP DRAFT; R2-081022, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20080211, 4 February 2008 (2008-02-04), XP050138815
- MAC RAPPORTEURS (QUALCOMM EUROPE ET AL: "E-UTRA MAC protocol specification update" 3GPP DRAFT; R2-081389 CR0001 TO 36321-800, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20080211, 23 February 2008 (2008-02-23), XP050139110
- "Universal Mobile Telecommunications System (UMTS); Evolved Universal Terrestrial Radio Access (E-UTRA) and Evolved Universal Terrestrial Radio Access (E-UTRAN); Overall description; Stage 2 (3GPP TS 36.300 version 8.3.0 Release 8); ETSI TS 136 300" ETSI STANDARDS, LIS, SOPHIA ANTIPOLIS CEDEX, FRANCE, vol. 3-R2, no. V8.3.0, 1 January 2008 (2008-01-01), XP014040735 ISSN: 0000-0001
- ASUSTEK: "Early Contention Loss Detection" 3GPP DRAFT; R2-080888 - EARLY CONTENTION LOSS DETECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20080211, 5 February 2008 (2008-02-05), XP050138697

## Description

This application claims the benefit of U.S. Provisional Application No. 61/036,478, filed on March 14, 2008 and entitled "Method and Apparatus for Flushing HARQ Buffer during a Random Access Procedure in a Wireless Communication System"

The present invention relates to a method and apparatus for handling a contention-based random access procedure in a wireless communication system according to the pre-characterizing clauses of claims 1 and 2.

Long Term Evolution wireless communication system (LTE system), an advanced high-speed wireless communication system established upon the 3G mobile telecommunication system, supports only packet-switched transmission, and tends to implement both Medium Access Control (MAC) layer and Radio Link Control (RLC) layer in one single communication site, such as in Node B (NB) alone rather than in NB and RNC (Radio Network Controller) respectively, so that the system structure becomes simple.

In LTE system, a user equipment (UE) needs to initiate a random access procedure to establish contact with NB for any of the following events: (1) Initial access from a RRC_IDLE state; (2) Initial access after a radio link failure; (3) Handover requiring random access procedure; (4) Downlink data arrival during a RRC_CONNECTED state requiring random access procedure; (5) Uplink data arrival during RRC_CONNECTED requiring random access procedure. Besides, the random access procedure can be performed by contention-based or non-contention-based manner depending on whether a Random Access Channel (RACH) resource used by the UE is assigned by the network or randomly selected by the UE itself.

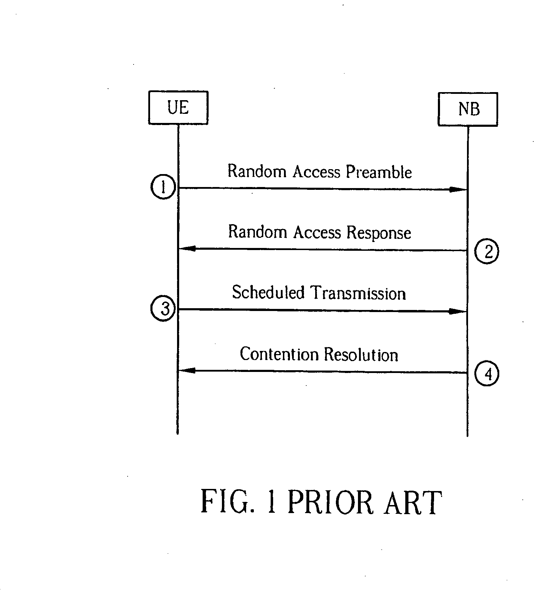

Please refer to FIG.1, which is a schematic diagram of a contention-based random access procedure. As shown in FIG.1, the contention-based random access procedure mainly includes the following four steps: (1) Step "Random Access Preamble on RACH in uplink", (2) Step "Random Access Response on Downlink Share Channel (DL-SCH)", (3) Step "Scheduled Transmission on Uplink Share Channel (UL-SCH)", (4) Step "Contention Resolution on DL-SCH or Physical Downlink Control Channel (PDCCH)". When a random access procedure is triggered by the RRC layer or the MAC layer, the UE firstly transmits a Random Access Preamble to NB by using a randomly selected RACH resource. After receiving a valid Random Access Response message from the NB, the UE shall send a Scheduled Transmission message with UE identity information to the NB. Then, contention can be resolved when the UE receives a Contention Resolution message containing specific UE identity information from the NB. Detailed operation of the random access procedure is referable in related MAC specification, and is not narrated herein.

According to different trigger events, the above UE identity information can be a Cell Radio Network Temporary Identifier (C-RNTI) MAC control element or a UE Contention Resolution Identity included in a Common Control Channel (CCCH) message and provided by an upper layer. In the prior art, once the Scheduled Transmission message with the UE identity information is transmitted, e.g. an uplink message containing a C-RNTI MAC control element is transmitted or an uplink message containing a CCCH message is transmitted, the UE shall start a Contention Resolution Timer and monitor the PDCCH for reception of the Contention Resolution message until the Contention Resolution Timer expires.

For the case of the uplink message containing a C-RNTI MAC control element, the UE shall consider the Contention Resolution as successful if receiving a PDCCH transmission addressed to its C-RNTI. And for the case of the uplink message containing a CCCH message, the UE shall consider the Contention Resolution as successful if a received MAC Packet Data Unit (PDU) contains a UE Contention Resolution Identity MAC control element which matches the UE Contention Resolution Identity provided by the upper layer. Otherwise, the UE shall consider the Contention Resolution as not successful. Besides, for both cases the UE shall also consider the Contention Resolution as not successful when the Contention Resolution Timer expires.

On the other hand, a Hybrid Automatic Repeat request (HARQ) process is applied for transmission of the Scheduled Transmission message. Thus, according to the current specification, the UE starts monitoring the PDCCH before receiving any HARQ feedback associated with the Scheduled Transmission message from the NB. It can take care of ACK to NACK error so that the contention can be resolved as soon as possible.

Therefore, if the ACK to NACK error occurs, the associated HARQ process will still continue the retransmission of the Scheduled Transmission message. However, once the UE receives the Contention Resolution message from the NB, it implies that the NB has received the Scheduled Transmission message. So, there is no need for the UE to continue retransmitting the Scheduled Transmission message. In such a situation, since the NB may have allocated uplink resources that the UE originally used to transmit the Scheduled Transmission message to other UE, continuing the retransmission of the Scheduled Transmission message may interfere uplink transmission of other UE. Besides, continuing the retransmission of the Scheduled Transmission message also causes unnecessary power consumption of the UE.

D1 (Philips; NXP Semiconductors: "Control of HARQ for RACH message 3 and 4"; 3GPP Draft; R2-081022; 2008-02-04).

discloses a contention based on a RACH procedure including the transmission of a message 3 and proposes to flush the HARQ buffer, when an ACK is received. Document MAC Rapporteurs: "E-ULTRA MAC protocol specification update"; 3GPP Draft; R2-081389 CR0001 to 36321-800; 2008-02-23 is a change request to a standard document. The change request proposes amongst others to flush the HARQ buffer, if a maximum number of transmissions is reached.

This in mind, the present invention aims at providing a method and apparatus for handling a contention-based random access procedure in a user equipment (UE) of a wireless communications system, so as to appropriately terminate retransmission of a Scheduled Transmission message for preventing uplink transmission of other UE from being interfered

This is achieved by a method and apparatus for handling a contention-based random access procedure in a user equipment (UE) of a wireless communication system according to the pre-characterizing clauses of claims 1 and 2. The dependent claims pertain to corresponding further developments and improvements.

In the following, the invention is further illustrated by way of example, taking reference to the accompanying drawings. Thereof
FIG.1 is a schematic diagram of a contention-based random access procedure.
FIG.2 is a schematic diagram of a wireless communications system.
FIG.3 is a function block diagram of a wireless communications device.
FIG.4 is a diagram of program code of FIG.3.
FIG.5 is a flowchart of a process according to an embodiment of the present invention.

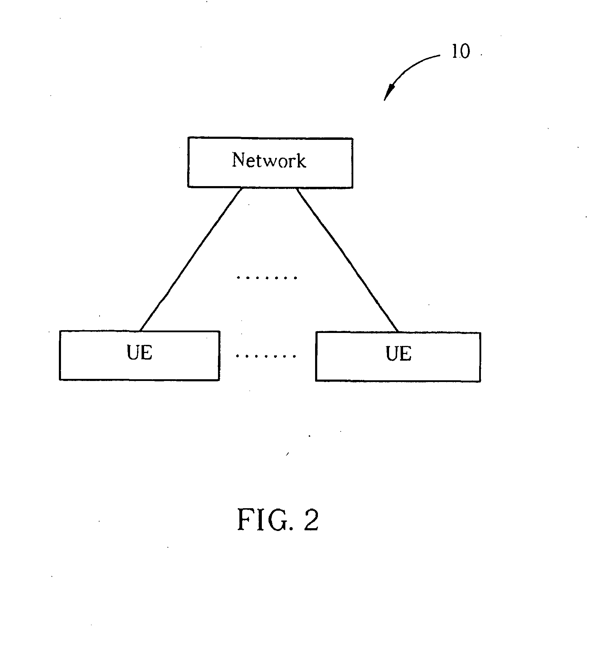

Please refer to FIG.2, which illustrates a schematic diagram of a wireless communication system 10. The wireless communication system 10 is preferably an LTE (long-term evolution) system, and is briefly composed of a network and a plurality of UEs. In FIG.2, the network and the UEs are simply utilized for illustrating the structure of the wireless communication system 10. Practically, the network may comprise a plurality of base stations (Node Bs), radio network controllers and so on according to actual demands, and the UEs can be devices such as mobile phones, computer systems, etc.

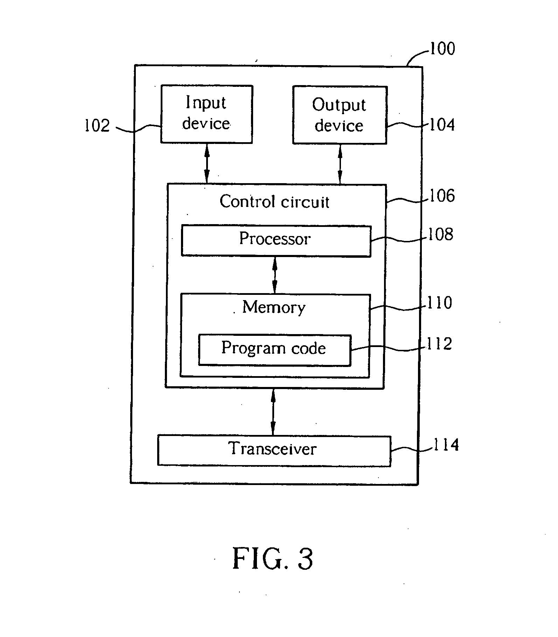

Please refer to FIG.3, which is a functional block diagram of a communication device 100 in a wireless communication system. The communications device 100 can be utilized for realizing the UEs in FIG .2. And the wireless communications system is preferably the LTE system. For the sake of brevity, FIG.3 only shows an input device 102, an output device 104, a control circuit 106, a central processing unit (CPU) 108, a memory 110, a program code 112, and a transceiver 114 of the communication device 100. In the communication device 100, the control circuit 106 executes the program code 112 in the memory 110 through the CPU 108, thereby controlling an operation of the communication device 100. The communication device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communication protocol framework, the transceiver 114 can be seen as a portion of Layer 1, and the control circuit 106 can be utilized to realize functions of Layer 2 and Layer 3.

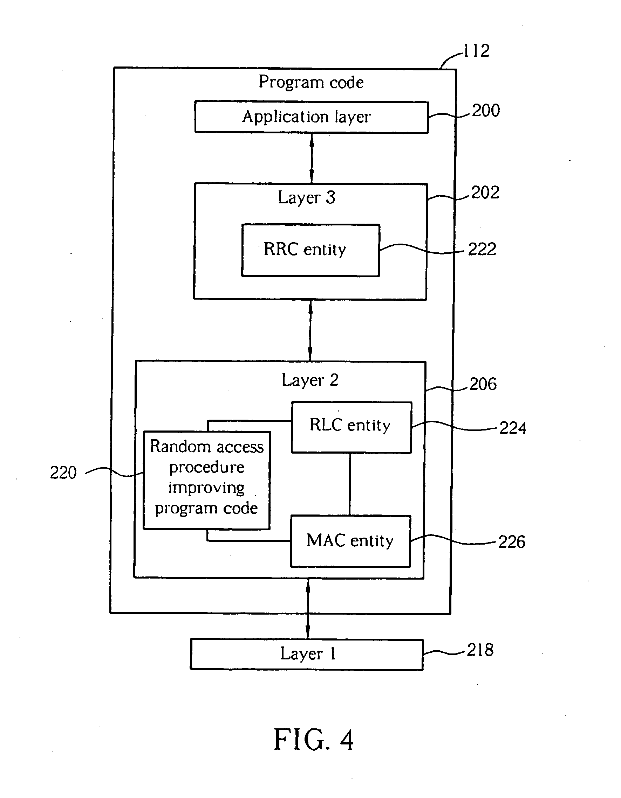

Please continue to refer to FIG.4. FIG.4 is a diagram of the program code 112 shown in FIG.3. The program code 112 includes an application layer 200, a Layer 3 202, and a Layer 2 206, and is coupled to a Layer 1 218. The Layer 3 202 includes a radio resource control (RRC) entity 222 for exchanging RRC messages with other communications device, such as a NB or a radio access network, through RRC procedures and controlling the Layer 1 218 and the Layer 2 206 with the RRC messages and information elements (IEs) thereof. The Layer 2 206 includes a radio link control (RLC) entity 224 that is capable of operating in an Acknowledged Mode (AM), a Unacknowledged Mode (UM) and a Transparent Mode (TM) for delivering packets from upper layers. A medium access control (MAC) entity 226 that is a lower entity of the RLC entity 224 is used for initiating a random access procedure in some situation to establish contact with the NB.

Moreover, the random access procedure can be performed by contention-based or non-contention-based manner depending on whether a Random Access Channel (RACH) resource used by the UE is assigned by the network or randomly selected by the UE itself. If a contention-based random access procedure is initiated, the UE shall send a Scheduled Transmission message carrying UE identity information to the NB for contention resolution. In such a situation, the embodiment of the present invention provides a random access procedure improving program code 220 in the program code 112 to avoid unnecessary retransmission of the Scheduled Transmission message, so as to prevent uplink transmission of other UE from being interfered and to prevent unnecessary power consumption of the UE.

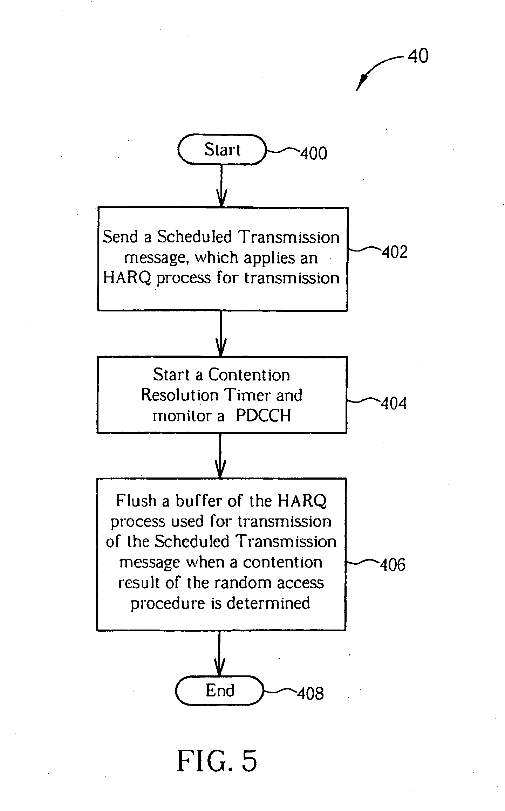

Please refer to FIG.5, which illustrates a schematic diagram of a process 40. The process 40 is utilized for handling a contention-based random access procedure in a UE of the wireless communication system, and can be compiled into the random access procedure improving program code 220. The process 40 comprises the following steps:
Step 400: Start.
Step 402: Send a Scheduled Transmission message, which applies a Hybrid Automatic Repeat reQuest (HARQ) process for transmission.
Step 404: Start a Contention Resolution Timer and monitor a Physical Downlink Control Channel (PDCCH).
Step 406: Flush a buffer of the HARQ process used for transmission of the Scheduled Transmission message when a contention result of the random access procedure is determined.
Step 408: End.

According to the process 40, during the contention-based random access procedure, the UE sends the Scheduled Transmission message to the NB. The Scheduled Transmission message applies the HARQ process for transmission. Meanwhile, the UE starts the Contention Resolution Timer and monitor the PDCCH. When the contention result of the random access procedure is determined, the UE flushes the buffer of the HARQ process to terminate the retransmission of the Scheduled Transmission message.

Therefore, when the contention result of the random access procedure is determined, the UE flushes the HARQ process buffer associated with the Scheduled Transmission message, so as to terminate the retransmission of the Scheduled Transmission message. For example, if the contention result of the random access procedure is successful, it implies that the NB has correctly received the Scheduled Transmission message. So, there is no need for the UE to continue retransmitting the Scheduled Transmission message, and thereby the HARQ process buffer associated with the Scheduled Transmission message shall be flushed. Conversely, if the contention result of the random access procedure is unsuccessful, it implies that the UE shall repeat transmission of a Random Access Preamble. So, there is also no need for the UE to continue retransmitting the Scheduled Transmission message, and thereby the buffer of the associated HARQ process shall be flushed as well.

Consequently, when ACK to NACK error occurs in the HARQ process, the embodiment of the present invention can appropriately terminate the retransmission of the Scheduled Transmission message, so as to prevent uplink transmission of other UE from being interfered and to prevent unnecessary power consumption of the UE.

For the case of the Scheduled Transmission message including a Cell Radio Network Temporary Identifier (C-RNTI) MAC control element, the contention result of the random access procedure is determined to be successful when a PDCCH transmission addressed to a C-RNTI of the UE is received; otherwise, the contention result of the random access procedure is determined to be unsuccessful when the Contention Resolution Timer expires.

On the other hand, for the case of the Scheduled Transmission message including a Common Control Channel (CCCH) message and the CCCH message further containing an UE Contention Resolution Identity provided by an upper layer, the contention result of the random access procedure is determined to be successful when a MAC Packet Data Unit (PDU) received by the UE contains an UE Contention Resolution Identity MAC control element which matches the UE Contention Resolution Identity provided by the upper layer. Conversely, the contention result of the random access procedure is determined to be unsuccessful when a MAC PDU received by the UE contains an UE Contention Resolution Identity MAC control element which does not match the UE Contention Resolution Identity provided by the upper layer or when the Contention Resolution Timer expires.

In summary, when the contention result of the random access procedure is determined, the UE flushes the HARQ process buffer associated with the Scheduled Transmission message no matter the contention result is successful or not successful. As a result, the embodiment of the present invention can appropriately terminate the retransmission of the Scheduled Transmission message, so as to prevent uplink transmission of other UE from being interfered and to prevent unnecessary power consumption of the UE.

## Claims

1. A method for handling a contention-based random access procedure in a user equipment, named UE hereinafter, of a wireless communication system, the method comprising:
sending a Scheduled Transmission message, the Scheduled Transmission message applying a Hybrid Automatic Repeat request, named HARQ hereinafter, process for transmission (402);
starting a Contention Resolution Timer and monitoring a Physical Downlink Control Channel, named PDCCH hereinafter (404); and
receiving an HARQ NACK in response to the scheduled Transmission message;
**characterized by** flushing a buffer of the HARQ process used for transmission of the Scheduled Transmission message when a contention result of the random access procedure is determined (406).

2. A communication device (100) for handling a contention-based random access procedure in a user equipment, named UE hereinafter, of a wireless communication system, the communication device (100) comprising:
a processor (108) for executing a program code (112); and
a memory (110) coupled to the processor (108) for storing the program code (112); wherein the program code (112) comprises:
sending a Scheduled Transmission message, the Scheduled Transmission message applying a Hybrid Automatic Repeat request, named HARQ hereinafter, process for transmission (402);
starting a Contention Resolution Timer and monitoring a Physical Downlink Control Channel, named PDCCH hereinafter (404); and
receiving an HARQ NACK in response to the scheduled Transmission message;
**characterized by** flushing a buffer of the HARQ process used for transmission of the Scheduled Transmission message when a contention result of the random access procedure is determined (406).

3. The method of claim 1 or the communication device (100) of claim 2, **characterized in that** the contention result of the random access procedure is successful.

4. The method of claim 1 or the communication device (100) of claim 2, **characterized in that** the contention result of the random access procedure is unsuccessful.

5. The method of claim 1 or the communication device (100) of claim 2, **characterized in that** the Scheduled Transmission message comprises a Cell Radio Network Temporary Identifier, named C-RNTI hereinafter, Medium Access Control, named MAC hereinafter, control element.

6. The method of claim 5 or the communication device (100) of claim 5, **characterized in that** the step of determining the contention result of the random access procedure (406) comprises:
determining the contention result of the random access procedure to be successful when a PDCCH transmission addressed to a C-RNTI of the UE is received.

7. The method of claim 5 or the communication device (100) of claim 5, **characterized in that** the step of determining the contention result of the random access procedure (406) comprises:
determining the contention result of the random access procedure to be unsuccessful when the Contention Resolution Timer expires.

8. The method of claim 1 or the communication device (100) of claim 2, **characterized in that** the Scheduled Transmission message comprises a Common Control Channel, named CCCH hereinafter, message, the CCCH message further comprising an UE Contention Resolution Identity provided by an upper layer.

9. The method of claim 8 or the communication device (100) of claim 8, **characterized in that** the step of determining the contention result of the random access procedure (406) comprises:
determining the contention result of the random access procedure to be successful when a MAC Packet Data Unit, named PDU hereinafter, received by the UE contains an UE Contention Resolution Identity MAC control element which matches the UE Contention Resolution Identity provided by the upper layer.

10. The method of claim 8 or the communication device (100) of claim 8, **characterized in that** the step of determining the contention result of the random access procedure (406) comprises:
determining the contention result of the random access procedure to be unsuccessful when a MAC Packet Data Unit, named PDU hereinafter, received by the UE contains an UE Contention Resolution Identity MAC control element which does not match the UE Contention Resolution Identity provided by the upper layer or when the Contention Resolution Timer expires.

## Patentansprüche

1. Ein Verfahren zur Handhabung eines zuganskonfliktbasierenden Direktzugriffsvorgangs in einem Teilnehmergerät, im Folgenden als UE bezeichnet, eines Systems zur drahtlosen Kommunikation, wobei das Verfahren aufweist:
Senden einer Scheduled-Transmission-Nachricht, wobei die Scheduled-Transmission-Nachricht einen Hybrid-Automatic-Repeat-Anfragevorgang, im Folgenden als HARQ-Vorgang bezeichnet, zum Übertragen anwendet (402);
Starten eines Contention-Resolution-Timers und Überwachen eines physikalischen Downlink-Steuerkanals, im Folgenden als PDCCH bezeichnet (404); und
Empfangen einer HARQ-NACK als Antwort auf die Scheduled-Transmission-Nachricht;
**gekennzeichnet durch** Leeren eines Puffers des HARQ-Vorgangs, der für die Übertragung der Scheduled-Transmission-Nachricht verwendet wird, wenn ein Zugangskonfliktresultat des Direktzugriffsverfahrens bestimmt wird (406).

2. Eine Kommunikationsvorrichtung (100) zur Handhabung eines zugangskonfliktbasierenden Direktzugriffsvorgangs in einem Teilnehmergerät, im Folgenden als UE bezeichnet, eines Systems zur drahtlosen Kommunikation, wobei die Kommunikationsvorrichtung (100) aufweist:
einen Prozessor (108) zum Ausführen eines Programmcodes (112); und
einen Speicher (110), der mit dem Prozessor (108) verbunden ist, zum Speichern des Programmcodes (112); wobei der Programmcode (112) aufweist:
Senden einer Scheduled-Transmission-Nachricht, wobei die Scheduled-Transmission-Nachricht einen Hybrid-Automatic-Repeat-Anfragevorgang, im Folgenden als HARQ-Vorgang bezeichnet, zum Übertragen anwendet (402);
Starten eines Contention-Resolution-Timers und Überwachen eines physikalischen Downlink-Steuerkanals, im Folgenden als PDCCH bezeichnet (404); und
Empfangen einer HARQ-NACK als Antwort auf die Scheduled-Transmission-Nachricht;
**gekennzeichnet durch** Leeren eines Puffers des HARQ-Vorgangs, der für die Übertragung der Scheduled-Transmission-Nachricht verwendet wird, wenn ein Zugangskonfliktresultat des Direktzugriffsverfahrens erkannt wird (406).

3. Verfahren gemäß Anspruch 1 oder Kommunikationsvorrichtung (100) gemäß Anspruch 2, **dadurch gekennzeichnet, dass** das Zugangskonfliktresultat des Direktzugriffsvorgangs erfolgreich ist.

4. Verfahren gemäß Anspruch 1 oder Kommunikationsvorrichtung (100) gemäß Anspruch 2, **dadurch gekennzeichnet, dass** das Zugangskonfliktresultat des Direktzugriffsvorgangs nicht erfolgreich ist.

5. Verfahren gemäß Anspruch 1 oder Kommunikationsvorrichtung (100) gemäß Anspruch 2, **dadurch gekennzeichnet, dass** die Scheduled-Transmission-Nachricht ein Cell-Radio-Network-Temporary-Identifier-, im Folgenden als C-RNTI- bezeichnet, Medium-Access-Control-, im Folgenden als MAC- bezeichnet, Element aufweist.

6. Verfahren gemäß Anspruch 5 oder Kommunikationsvorrichtung (100) gemäß Anspruch 5, **dadurch gekennzeichnet, dass** der Schritt des Bestimmens des Zugangskonfliktresultats des Direktzugriffsvorgangs (406) aufweist:
Bestimmen, dass das Zugangskonfliktresultat des Direktzugriffsvorgangs erfolgreich ist, wenn eine PDCCH-Übertragung, die an ein C-RNTI des UE adressiert ist, empfangen wird.

7. Verfahren gemäß Anspruch 5 oder Kommunikationsvorrichtung (100) gemäß Anspruch 5, **dadurch gekennzeichnet, dass** der Schritt des Bestimmens des Zugangskonfliktresultats des Direktzugriffsvorgangs (406) aufweist:
Bestimmen, dass das Zugangskonflitkresultat des Zufallszugriffsvorgangs nicht erfolgreich ist, wenn der Conflict-Resolution-Timer abläuft.

8. Verfahren gemäß Anspruch 1 oder Kommunikationsvorrichtung (100) gemäß Anspruch 2, **dadurch gekennzeichnet, dass** die Scheduled-Transmission-Nachricht eine Common-Control-Channel-Nachricht, im Folgenden als CCCH-Nachricht bezeichnet, aufweist, wobei die CCCH-Nachricht weiter eine UE-Contention-Resolution-Identity aufweist, die von einem höheren Layer bereitgestellt wird.

9. Verfahren gemäß Anspruch 8 oder Kommunikationsvorrichtung (100) gemäß Anspruch 8, **dadurch gekennzeichnet, dass** der Schritt des Bestimmens des Zugangskonfliktresultats des Direktzugriffsvorgangs (406) aufweist:
Bestimmen, dass das Zugangskonfliktresultat des Direktzugriffsvorgangs erfolgreich ist, wenn eine MAC-Paketdateneinheit, im Folgenden als PDU bezeichnet, die von dem UE empfangen wurde, ein UE-Contention-Resolution-Identity-MAC-Steuerelement enthält, welches mit der von dem höheren Layer bereitgestellten UE-Contention-Resolution-Identity übereinstimmt.

10. Verfahren gemäß Anspruch 8 oder Kommunikationsvorrichtung (100) gemäß Anspruch 8, **dadurch gekennzeichnet, dass** der Schritt des Bestimmens des Zugangskonfliktresultats des Direktzugriffsvorgangs (406) aufweist:
Bestimmen, dass das Zugangskonfliktresultat des Direktzugriffsvorgangs nicht erfolgreich ist, wenn eine MAC-Paketdateneinheit, im Folgenden als PDU bezeichnet, die von dem UE empfangen wurde, ein UE-Contention-Resolution-Identity-MAC-Steuerelement enthält, welches nicht mit der von dem höheren Layer bereitgestellten UE-Contention-Resolution-Identity übereinstimmt, oder wenn der Contention-Resolution-Timer abläuft.

## Revendications

1. Procédé de gestion d'une procédure d'accès aléatoire à base de conflit dans un équipement utilisateur, ci-après désigné par UE, d'un système de communication sans fil, le procédé comprenant le fait :
d'envoyer un message de Transmission Planifiée, le message de Transmission Planifiée appliquant un processus pour une transmission (402) de Demande de Répétition Automatique Hybride, ci-après désignée par HARQ ;
de démarrer un Temporisateur de Résolution de Conflit d'Accès et de surveiller un Canal de Commande Physique de Liaison Descendante, ci-après désigné par PDCCH (404) ; et
de recevoir un accusé de réception négatif de HARQ en réponse au message de Transmission Planifiée ;
**caractérisé par** le fait de vider une mémoire tampon du processus HARQ utilisé pour une transmission du message de Transmission Planifiée lorsqu'un résultat de conflit de la procédure d'accès aléatoire est déterminé (406).

2. Dispositif de communication (100) pour la gestion d'une procédure d'accès aléatoire à base de conflit dans un équipement utilisateur, ci-après désigné par UE, d'un système de communication sans fil, le dispositif de communication (100) comprenant :
un processeur (108) pour exécuter un code de programme (112) ; et
une mémoire (110) couplée au processeur (108) pour stocker le code de programme (112) ; où le code de programme (112) comprend le fait :
d'envoyer un message de Transmission Planifiée, le message de Transmission Planifiée appliquant un processus pour une transmission (402) de Demande de Répétition Automatique Hybride, ci-après désignée par HARQ ;
de démarrer un Temporisateur de Résolution de Conflit d'Accès et de surveiller un Canal de Commande Physique de Liaison Descendante, ci-après désigné par PDCCH (404) ; et
de recevoir un accusé de réception négatif de HARQ en réponse au message de Transmission Planifiée ;
**caractérisé par** le fait de vider une mémoire tampon du processus HARQ utilisé pour une transmission du message de Transmission Planifiée lorsqu'un résultat de conflit de la procédure d'accès aléatoire est déterminé (406).

3. Procédé de la revendication 1 ou dispositif de communication (100) de la revendication 2, **caractérisé en ce que** le résultat de conflit de la procédure d'accès aléatoire est satisfaisant.

4. Procédé de la revendication 1 ou dispositif de communication (100) de la revendication 2, **caractérisé en ce que** le résultat de conflit de la procédure d'accès aléatoire n'est pas satisfaisant.

5. Procédé de la revendication 1 ou dispositif de communication (100) de la revendication 2, **caractérisé en ce que** le message de Transmission Planifiée comprend un élément de commande de Commande d'Accès au Support, ci-après désigné par MAC, d'Identifiant Temporaire de Réseau Radio Cellulaire, ci-après désigné par C-RNTI.

6. Procédé de la revendication 5 ou dispositif de communication (100) de la revendication 5, **caractérisé en ce que** l'étape de détermination du résultat de conflit de la procédure d'accès aléatoire (406) comprend le fait :
de déterminer le résultat de conflit de la procédure d'accès aléatoire comme étant satisfaisant lorsqu'une transmission PDCCH adressée à un identifiant C-RNTI de l'UE est reçue.

7. Procédé de la revendication 5 ou dispositif de communication (100) de la revendication 5, **caractérisé en ce que** l'étape de détermination du résultat de conflit de la procédure d'accès aléatoire (406) comprend le fait :
de déterminer le résultat de conflit de la procédure d'accès aléatoire comme étant non satisfaisant lorsque le Temporisateur de Résolution de Conflit d'Accès expire.

8. Procédé de la revendication 1 ou dispositif de communication (100) de la revendication 2, **caractérisé en ce que** le message de Transmission Planifiée comprend un message de Canal de Commande Commun, ci-après désigné par CCCH, le message CCCH comprenant en outre une Identité de Résolution de Conflit d'Accès de l'UE fournie par une couche supérieure.

9. Procédé de la revendication 8 ou dispositif de communication (100) de la revendication 8, **caractérisé en ce que** l'étape de détermination du résultat de conflit de la procédure d'accès aléatoire (406) comprend le fait :
de déterminer le résultat de conflit de la procédure d'accès aléatoire comme étant satisfaisant lorsqu'une Unité de Données en Paquets MAC, ci-après désignée par PDU, reçue par l'UE contient un élément de commande MAC d'Identité de Résolution de Conflit d'Accès de l'UE qui correspond à l'Identité de Résolution de Conflit d'Accès de l'UE fournie par la couche supérieure.

10. Procédé de la revendication 8 ou dispositif de communication (100) de la revendication 8, **caractérisé en ce que** l'étape de détermination du résultat de conflit de la procédure d'accès aléatoire (406) comprend le fait :
de déterminer le résultat de conflit de la procédure d'accès aléatoire comme étant non satisfaisant lorsqu'une Unité de Données en Paquets MAC, ci-après désignée par PDU, reçue par l'UE contient un élément de commande MAC d'Identité de Résolution de Conflit d'Accès de l'UE qui ne correspond pas à l'Identité de Résolution de Conflit d'Accès de l'UE fournie par la couche supérieure ou lorsque le Temporisateur de Résolution de Conflit d'Accès expire.
